(19) **Europäisches Patentamt**
**European Patent Office**
**Office européen des brevets**

(11) **EP 2 959 300 B1**

(12) **FASCICULE DE BREVET EUROPEEN**

(45) Date de publication et mention
de la délivrance du brevet:
**05.04.2017 Bulletin 2017/14**

(21) Numéro de dépôt: **14704327.7**

(22) Date de dépôt: **11.02.2014**

(51) Int Cl.:
***G01P 15/13*** *(2006.01)* ***G01P 15/08*** *(2006.01)*

(86) Numéro de dépôt international:
**PCT/EP2014/052652**

(87) Numéro de publication internationale:
**WO 2014/128027 (28.08.2014 Gazette 2014/35)**

(54) **CAPTEUR A ACCÉLÉROMÈTRE PENDULAIRE ÉLECTROSTATIQUE ET PROCÉDÉ DE COMMANDE D'UN TEL CAPTEUR**

SENSOR MIT EINEM ELEKTROSTATISCHEN PENDELARTIGEN BESCHLEUNIGUNGSMESSER UND VERFAHREN ZUR STEUERUNG SOLCH EINES SENSORS

SENSOR WITH ELECTROSTATIC PENDULAR ACCELEROMETER AND METHOD OF CONTROLLING SUCH A SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2013 FR 1300361**

(43) Date de publication de la demande:
**30.12.2015 Bulletin 2015/53**

(73) Titulaire: **Safran Electronics & Defense
92100 Boulogne-Billancourt (FR)**

(72) Inventeurs:
• **BRISSON, Raphaël
92100 Boulogne-Billancourt (FR)**

• **RAGOT, Vincent
92100 Boulogne-Billancourt (FR)**

(74) Mandataire: **Lavialle, Bruno François Stéphane et al
Cabinet Boettcher
16, rue Médéric
75017 Paris (FR)**

(56) Documents cités:
**WO-A1-2010/046368    US-A- 5 812 427
US-A1- 2008 295 597    US-B1- 6 301 965**

EP 2 959 300 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un capteur à accéléromètre pendulaire électrostatique et un procédé de commande d'un tel capteur. Le capteur est par exemple un capteur de type MEMS (de l'anglais Micro Electro-Mechanical Systems).

Un accéléromètre pendulaire électrostatique comprend un boîtier auquel est reliée une masse sismique reliée au boîtier par une ou plusieurs charnières positionnées de telle manière que la masse sismique forme un pendule mobile par rapport au boîtier soit en translation soit en rotation. Les déplacements de la masse sismique sous l'effet de l'accélération sont généralement détectés au moyen de trois électrodes. Une première électrode fixe et une deuxième électrode fixe sont solidaires du boîtier et reliées à un circuit d'excitation. La troisième électrode, mobile, est portée par le pendule et reliée à un circuit de détection.

Chaque électrode fixe forme avec l'électrode mobile une capacité dont la valeur dépend de leur écartement. En l'absence de défaut de réalisation et lorsque le capteur n'est pas soumis à une accélération suivant son axe sensible, le pendule demeure dans une position neutre dans laquelle les deux capacités sont égales . En revanche, lorsque le pendule est soumis à une accélération suivant son axe sensible, il se déplace entraînant une diminution de la capacité formée par l'électrode mobile et l'une des électrodes fixes, et une augmentation de la capacité formée par l'électrode mobile et l'autre des électrodes fixes. Cette variation des capacités dépend également des déformations du boîtier et du pendule.

Dans un fonctionnement en boucle ouverte, l'accélération appliquée selon l'axe sensible du capteur est déduite de la différence existant entre les deux capacités. Ce mode de fonctionnement présente cependant plusieurs inconvénients :

- la direction de l'axe sensible varie selon la position du pendule lorsque celui-ci est mobile en pivotement ;
- il existe un décalage (ou offset) dû aux dissymétries de fabrication des capacités (différence de surface des électrodes et/ou différence des entrefers entre les électrodes) ;
- il existe des non-linéarités des mesures en raison de non-linéarités des capacités en fonction du déplacement des électrodes ;
- lors des mouvements du pendule, le gaz environnant ce dernier se comprime et se dilate engendrant des efforts sur le pendule ;
- la bande passante est réduite par la fréquence propre du pendule.

Dans un fonctionnement en boucle fermée, la position du pendule est asservie dans une position neutre, ou position de consigne, à mi-distance entre les électrodes fixes, en appliquant au pendule une force électrostatique. La force électrostatique doit donc compenser l'accélération appliquée selon l'axe sensible, ce qui permet l'estimation de cette dernière. La force électrostatique est le résultat de tensions appliquées aux électrodes pour maintenir à zéro la différence des capacités.

Le capteur comprend un circuit d'excitation pour chaque électrode fixe, agencé pour alimenter les électrodes de manière à engendrer ladite force électrostatique.

Le caractère quadratique de la force électrostatique vis-à-vis des tensions appliquées complique la conception du circuit de commande réalisant l'asservissement du pendule et l'estimation de l'accélération. Pour contourner cette difficulté, il est connu de commander le pendule en tout ou rien à l'aide d'impulsions de tensions calibrées. Ces impulsions sont appliquées à l'une ou l'autre des électrodes selon qu'il s'agit de tirer ou de pousser le pendule pour le ramener vers sa position de consigne. La densité d'impulsions destinées à pousser (ou à tirer) le pendule, c'est -à-dire la quantité d'impulsions par intervalle de temps, est alors une fonction affine de l'accélération à mesurer. Ainsi, une accélération nulle sera compensée par un nombre égal en moyenne d'impulsions dans les deux sens.

Toutefois, si la symétrie des impulsions appliquées aux deux électrodes est imparfaite (principalement en raison d'une différence entre la durée de chaque impulsion appliquée à la première électrode fixe et la durée de chaque impulsion appliquée à la deuxième électrode fixe), la densité d'impulsion est modifiée par l'asservissement pour maintenir le pendule en position de consigne, ce qui biaise l'estimée de l'accélération. En prenant comme exemple un accéléromètre dont chacune des tensions appliquées durant la phase de commande exerce une force moyenne sur une durée $T_s = 1\mu s$ équivalant à une accélération du pendule de 50g, il faut, pour maîtriser le biais d'un tel accéléromètre à une valeur inférieure à $50\mu g$, que la symétrie des impulsions soit maîtrisée avec une précision inférieure au rapport $50\mu g/50g$ soit $1.10^{-6}$. Il est donc nécessaire de maîtriser la durée des impulsions appliquées à chaque électrode de telle manière que la dissymétrie n'excède par $1.10^{-6} \times 1\mu s$ soit 1ps, ce qui est extrêmement délicat.

Les dissymétries de réalisation qui sont le point faible de la commande en tout ou rien sont donc un obstacle majeur à l'obtention de meilleures performances de ces capteurs.

Le brevet US5812427 divulgue un capteur accélérométrique comprenant un circuit de détection, un circuit d'excitation et un commutateur qui sont reliés à un circuit de commande agencé pour que les première et deuxième électrodes soient excitées par des trains d'impulsions de manière à maintenir le pendule dans une position de consigne et à déterminer une accélération subie par le pendule. Le brevet US6301965 décrit un procédé ou lors d'une phase de commande, l'une ou l'autre des électrodes fixes est excité par des impulsions de commande pour asservir à zéro l'erreur d'asservissement, ayant deux sorties du circuit d'excitation - une sortie pour chaque interrupteur.

Un but de l'invention est de fournir un moyen permettant d'améliorer les performances de tels capteurs.

A cet effet, on prévoit, selon l'invention, un capteur accélérométrique comprenant au moins un accéléromètre pendulaire électrostatique ayant une première électrode et une deuxième électrode fixes qui sont fixées à un boîtier et qui sont reliées à un circuit d'excitation, et une troisième électrode qui est portée par un pendule relié au boîtier pour être mobile et qui est reliée à un circuit de détection. Le circuit d'excitation a une sortie raccordée à un commutateur relié aux première et deuxième électrodes, le commutateur ayant une première position de connexion et une deuxième position de connexion pour raccorder sélectivement au circuit d'excitation la première électrode et la deuxième électrode, et le circuit d'excitation, le commutateur et le circuit de détection sont reliés à un circuit de commande agencé pour que les première et deuxième électrodes soient excitées par des impulsions de manière à maintenir le pendule dans une position de consigne et à déterminer une accélération subie par le pendule.

Ainsi, les impulsions sont délivrées à chaque électrode par le même circuit d'excitation limitant ainsi les problèmes liés aux dissymétries de fabrication et de vieillissement de l'électronique du circuit d'excitation.

L'invention concerne également un procédé de commande d'un capteur comprenant au moins un accéléromètre pendulaire électrostatique ayant une première électrode et une deuxième électrode fixes qui sont fixées à un boîtier et qui sont reliées à un circuit d'excitation, et une troisième électrode qui est portée par un pendule relié au boîtier pour être mobile et qui est reliée à un circuit de détection. Le procédé de commande comprend les étapes de :

- exciter alternativement l'une et l'autre des électrodes fixes par des impulsions de détection pour détecter une première capacité et une deuxième capacité entre l'électrode mobile et les électrodes fixes,
- estimer une position du pendule à partir des capacités détectées,
- déterminer une erreur d'asservissement correspondant à une différence entre la position estimée et une position de consigne,
- à partir de l'erreur d'asservissement, déterminer une commande déterminant si la prochaine impulsion de détection va pousser ou tirer le pendule,
- calculer l'accélération à mesurer en fonction de la position de consigne et de la commande déterminée,
- lors d'une phase de commande, exciter l'une ou l'autre des électrodes fixes par des impulsions de commande pour asservir à zéro l'erreur d'asservissement.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est une vue schématique d'un capteur selon un premier mode de réalisation de l'invention ;
- la figure 2 est une vue schématique partielle d'un capteur selon un deuxième mode de réalisation ;
- la figure 3 est une vue analogue à la figure 2 d'un capteur selon un troisième mode de réalisation ;
- la figure 4 est un chronogramme illustrant la commande du capteur.

En référence aux figures, le capteur accélérométrique de l'invention comprend un accéléromètre pendulaire électrostatique généralement désigné en 1. L'accéléromètre 1 comprend un boîtier 2 auquel est reliée une masse sismique 3 reliée au boîtier 2 par une charnière 4 positionnée de telle manière que la masse sismique 3 forme un pendule mobile par rapport au boîtier 2 selon un mouvement de pivotement.

L'accéléromètre 1 comprend une première électrode fixe 5.1 et une deuxième électrode fixe 5.2 qui sont solidaires du boîtier 2 et qui sont reliées à un circuit d'excitation généralement désigné en 6, et une troisième électrode 5.3 constituant la masse sismique 3 et reliée à un circuit de détection généralement désigné en 7. Un circuit de commande généralement désigné en 8 est relié au circuit d'excitation 6 et au circuit de détection 7 pour piloter ceux-ci.

Le circuit d'excitation 6 a une sortie raccordée à un commutateur 9 relié à la première électrode 5.1 et à la deuxième électrode 5.2. Le commutateur 9 a une première position de connexion et une deuxième position de connexion pour raccorder sélectivement au circuit d'excitation 6 la première électrode 5.1 et la deuxième électrode 5.2. Plus précisément, le commutateur 9 comprend un interrupteur $I_1$ agencé pour relier la première électrode 5.1 soit à la sortie du circuit d'excitation 6 (première position de connexion) soit à la masse (deuxième position de connexion) et un interrupteur $I_2$ agencé pour relier la deuxième électrode 5.2 soit à la sortie du circuit d'excitation 6 (deuxième position de connexion) soit à la masse (première position de connexion). Le commutateur 9 est relié au circuit de commande 8 pour être piloté par celui-ci.

Le circuit de commande 8 comprend un premier estimateur 10 ayant une entrée reliée au circuit de détection

7 et une sortie reliée à une entrée négative d'un sommateur 11 ayant une sortie reliée à une entrée d'un correcteur 12 ayant une sortie reliée à un séquenceur 13. Le circuit de commande 8 comprend en outre un deuxième estimateur 14 ayant une entrée reliée à la sortie du correcteur 12, une sortie reliée à l'entrée additive du sommateur 11 et une sortie fournissant l'estimée de l'accélération $\gamma_e$.

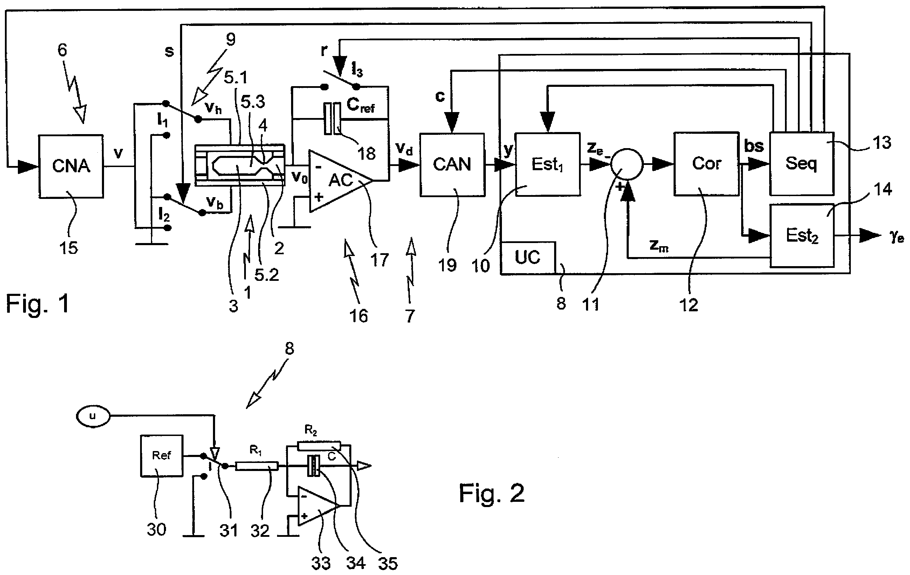

Dans le premier mode de réalisation représenté à la figure 1, le circuit d'excitation 6 comprend un convertisseur numérique analogique 15 raccordé au commutateur 9 et piloté par le circuit de commande 8.

Le circuit de détection 7 comprend un étage amplificateur principal 16 comportant un amplificateur de charge 17 équipé d'un condensateur de bouclage 18 de capacité $C_{ref}$ et d'un interrupteur $I_3$. L'étage amplificateur a une entrée reliée à la troisième électrode 5.3 et une sortie reliée à une entrée d'un convertisseur analogique numérique 19 ayant une sortie reliée au premier estimateur 10 de l'unité de commande 8.

Le fonctionnement du capteur va maintenant être décrit.

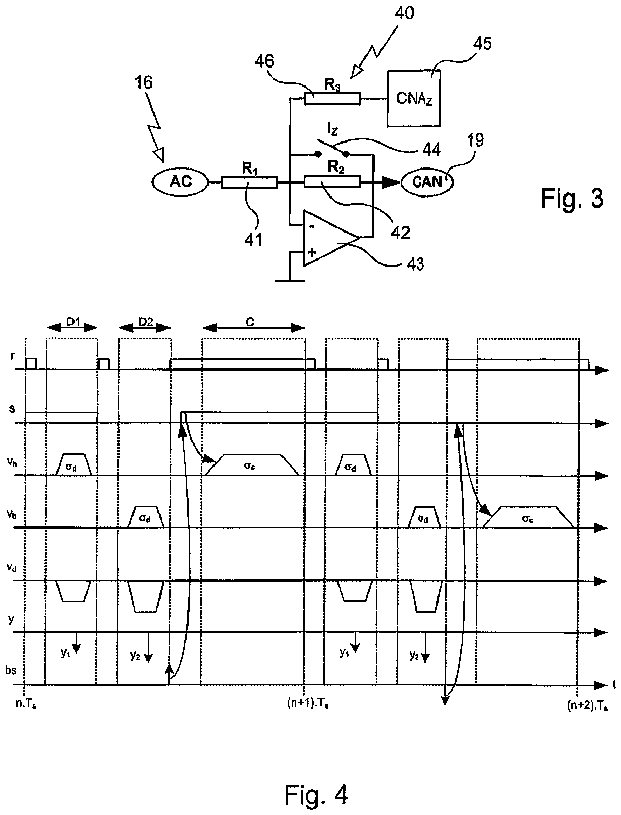

L'unité de commande 8 gère le fonctionnement du capteur et en particulier la chronologie des diverses opérations échantillonnées à une fréquence $F_s$ (selon des périodes $T_s = 1/F_s$, voir la figure 4). Le séquenceur 13 séquence les opérations à l'intérieur de la période d'échantillonnage $T_s$ et d'une période d'échantillonnage (n)$T_s$ à l'autre (n+1)$T_s$. Le séquenceur 13 de l'unité de commande 8 pilote de manière séquentielle et cyclique le convertisseur numérique analogique 15 par une commande u, les interrupteurs analogiques $I_1$, $I_2$ par une commande s et le convertisseur analogique numérique 19 par une commande c et l'interrupteur analogique $I_3$ par une commande r.

Selon l'état logique de la commande s, l'une des électrodes 5.1, 5.2 est reliée à la sortie v du convertisseur numérique analogique 15 tandis que l'autre électrode 5.2, 5.1 est simultanément reliée à la masse. On notera que le séquenceur 13 est agencé pour commander cette commutation lorsque la sortie v est à zéro afin d'éviter des perturbations transitoires lors de la commutation.

Les tensions $v_h$ et $v_b$ appliquées respectivement aux électrodes 5.1, 5.2 sont séquencées de sorte à mesurer les capacités $C_h$ (capacité formée entre les électrodes 5.1 et 5.3) et $C_b$ (capacité formée entre les électrodes 5.2 et 5.3) aux fins d'appliquer la force électrostatique permettant d'asservir le pendule à sa position de consigne imposée par l'unité de commande. En supposant nulle la vitesse initiale du pendule, la durée $T_i$ de chaque impulsion appliquée à chacune des électrodes 5.1, 5.2 est choisie suffisamment courte pour que le déplacement z provoqué par ladite impulsion au bout de la durée $T_s$ reste petit devant l'entrefer e existant entre ladite électrode fixe 5.1, 5.2 et l'électrode mobile 5.3.

L'interrupteur $I_3$, qui boucle l'amplificateur de charge 17, est commandé par le signal r issu du séquenceur 13 et provoque, par contre-réaction, le maintien à un potentiel fixe, par exemple zéro comme sur le schéma, par l'amplificateur de charge 17, du potentiel $v_0$ à l'électrode 5.3.

La tension de sortie $v_d$ de l'amplificateur de charge 17 est convertie en une grandeur numérique y par le convertisseur analogique numérique 19 piloté par la commande s.

L'estimateur 10 fournit l'estimée $z_e$ du déplacement du pendule à partir de la grandeur y.

L'estimateur 14 fournit à l'entrée additive du sommateur 11 une perturbation $z_m$ déterminée de façon connue en soi pour exciter et estimer certains termes d'erreurs de sorte à en compenser les effets, comme on le verra plus loin.

Le sommateur détermine la différence $z_m - z_e$ qui est transmise au correcteur 12 qui élabore une commande bs valant +1 ou -1 selon qu'il convient de pousser ou de tirer sur le pendule pour ramener à zéro l'entrée du correcteur 12. Ainsi, le correcteur 12 assure l'asservissement à zéro de la différence $z_m - z_e$.

L'estimateur 14 détermine en outre l'estimée $\gamma_e$ de l'accélération à mesurer.

Dans le procédé de l'invention, chaque période d'échantillonnage $T_s$ comprend trois phases principales, à savoir :

- une première phase de détection $D_1$ dans laquelle la tension $V_d$ est détectée pour le couple d'électrodes 5.1 et 5.3, et convertie en une grandeur $y_1$ ;
- une deuxième phase de détection $D_2$ dans laquelle la tension $V_d$ est détectée pour le couple d'électrodes 5.2 et 5.3, et convertie en une grandeur $y_2$ ;
- une phase de commande C dans laquelle un signal d'excitation est appliqué soit à l'électrode fixe 5.1 (ici n.$T_s$) soit à l'électrode fixe 5.2 (ici (n+1).$T_s$) selon qu'il est nécessaire d'attirer la masse sismique soit vers l'électrode fixe 5.1 soit vers l'électrode fixe 5.2 pour la ramener vers sa position de consigne.

A l'issue des deux phases de détection, le correcteur 12 détermine le signe de la commande bs qui détermine si le signal de commande u doit être appliqué à l'électrode fixe 5.1 ou à l'électrode fixe 5.2.

Les trois phases $D_1$, $D_2$ et C sont séparées par une phase de relaxation pendant laquelle les interrupteurs $I_1$, $I_2$, $I_3$ sont prépositionnés alors que la tension des convertisseurs est à Zéro.

Les phases de détection puis la phase de commande vont maintenant être détaillées.

Durant la phase de détection $D_1$ dédiée à la mesure de $C_h$ la commande logique s est à 1 de sorte que l'électrode fixe 5.1 est connectée par l'interrupteur $I_1$ à la sortie v du convertisseur numérique analogique 15 et l'électrode fixe 5.2 est connectée à la masse par l'interrupteur $I_2$.

La capacité de bouclage de l'amplificateur de charge est préalablement court-circuitée par $I_3$ ($r = 1$, réinitialisation de l'amplificateur de charge) alors que la sortie du convertisseur numérique analogique 15 est à zéro.

Après que r soit revenu à zéro, le potentiel $v_h$ est amené par l'action du convertisseur numérique analogique 15 à une valeur constante $V_{ref}$, ce qui transfert une quantité de charge $C_h.V_{ref}$ dans la capacité $C_{ref}$.

Lorsque la sortie de l'amplificateur de charge 17 est stabilisée, une première conversion analogique/numérique de $v_d$ est réalisée. $Q_{os}$ étant la quantité de charge injectée, lors de son ouverture, par l'interrupteur analogique $I_3$ associé à la capacité $C_{ref}$, $v_{os}$ étant l'offset ramené en entrée du convertisseur numérique analogique 15 et $G_{can}$ étant le gain du convertisseur analogique numérique 19, la sortie du convertisseur analogique numérique 19 en fin de phase $D_1$ vaut alors :

$$y_1 = G_{can} \cdot \left( -\frac{C_h \cdot V_{ref} + Q_{os}}{C_{ref}} + v_{os} \right)$$

La phase $D_2$ dédiée à la mesure de $C_b$ est identique à la phase $D_1$ si ce n'est que les rôles des électrodes 5.1 et 5.2 sont inversés par le fait que s est à 0 et non plus à 1. Il en résulte que la seconde valeur codée par le convertisseur analogique numérique 19 en fin de phase $D_2$ vaut :

$$y_2 = G_{can} \cdot \left( -\frac{C_b \cdot V_{ref} + Q_{os}}{C_{ref}} + v_{os} \right)$$

C'est grâce à l'emploi d'un convertisseur numérique analogique 15 unique associé aux interrupteurs $I_1$ et $I_2$ que la valeur de $V_{ref}$ est identique dans les expressions des valeurs $y_1$ et $y_2$.

L'opération réalisée par l'estimateur 10 consiste à calculer la différence entre $y_1$ et $y_2$ puis à multiplier le résultat par le gain $G_{comp}$ :

$$z_e = G_{comp} \cdot (y_2 - y_1) = G_{comp} \cdot G_{can} \cdot \frac{C_h - C_b}{C_{ref}} \cdot V_{ref}$$

$$G_{comp} = \left( 2 \cdot G_{can} \cdot \frac{C_1}{C_{ref}} \cdot \frac{V_{ref}}{e} \right)^{-1}$$

Les biais d'origine électronique ($Q_{os}$ et $v_{os}$) sont éliminés, de plus l'emploi d'un convertisseur analogique numérique 19 unique donne le même poids aux mesures de $C_h$ et $C_b$ ce qui élimine une autre source de biais.

On notera qu'en remplaçant les capacités par leurs expressions en fonction de z dans l'expression de $Z_e$ ci-dessus, il apparaît que les dissymétries des électrodes sont responsables d'un biais d'estimation $z_0$ :

$$z_e = \left( 2 \cdot \frac{C_1}{e} \right)^{-1} \cdot \left[ \sum_{i=0}^{+\infty} (1+\varepsilon_i) \cdot C_i \cdot \left(\frac{z}{e}\right)^i - (1-\varepsilon_i) \cdot C_i \cdot \left(-\frac{z}{e}\right)^i \right]$$

$$\approx e \cdot \left[ \varepsilon_0 \cdot \frac{C_0}{C_1} + \frac{z}{e} + \varepsilon_2 \cdot \frac{C_2}{C_1} \cdot \left(\frac{z}{e}\right)^2 + \frac{C_3}{C_1} \cdot \left(\frac{z}{e}\right)^3 + \varepsilon_4 \cdot \frac{C_4}{C_1} \cdot \left(\frac{z}{e}\right)^4 \right] \approx \underbrace{\varepsilon_0 \cdot \frac{C_0}{C_1} \cdot e}_{z_0} + z$$

En ce qui concerne la phase de commande, la différence $z_m - z_e$ est asservie à zéro par le correcteur 12 qui élabore une commande bs valant +1 ou -1 selon qu'il convient de pousser ou bien de tirer sur le pendule, il en résulte que s = (bs+1)/2.

Si bs = +1, s est forcé à 1 de sorte que le commutateur 9 connecte la sortie du convertisseur numérique analogique 15 à l'électrode fixe 5.1 et l'électrode fixe 5.2 à la masse. La tension du convertisseur numérique analogique 15 passe alors de zéro à une valeur non nulle puis revient à zéro avant la phase de relaxation. La force électrostatique qui est attractive tire alors le pendule vers l'électrode fixe 5.1.

Si bs = -1, s est forcé à 0 de sorte que le commutateur 9 connecte la sortie du convertisseur numérique analogique 15 à l'électrode fixe 5.2 et l'électrode fixe 5.1 à la masse. La tension du convertisseur numérique analogique 15 passe alors de zéro à une valeur non nulle puis revient à zéro avant la phase de relaxation en décrivant une trajectoire temporelle identique à celle décrite dans le cas où bs = +1. La force électrostatique tire alors le pendule vers l'électrode fixe 5.2.

On note que, de manière analogue à la détection, l'emploi d'un convertisseur numérique analogique 15 unique garantit à nouveau l'égalité des tensions appliquées aux électrodes 5.1, 5.2. Ceci est particulièrement important dans la phase de commande car la force électrostatique appliquée au pendule est égale à la différence des forces électrostatiques appliquées aux électrodes 5.1, 5.2. Or, ces forces étant proportionnelles au carré des tensions appliquées, il faut maîtriser la symétrie des carrés desdites tensions et, contrairement au cas de la détection, cette symétrie doit être obtenue non seulement aux instants d'échantillonnage mais aussi en moyenne sur la période d'échantillonnage. Le convertisseur numérique analogique 15 unique et multiplexé permet d'appliquer des profils de tension identiques aux électrodes 5.1, 5.2 indépendamment des défauts de réalisation de l'électronique. Les instants de commutation des interrupteurs ne sont pas critiques du fait que ceux-ci sont commutés lorsque la tension de sortie du convertisseur numérique analogique 15 est nulle.

Les formes d'onde délivrées par le convertisseur numérique analogique 15 durant les deux phases de détection et la phase de commande sont caractérisées par leurs moyennes quadratiques (ou valeurs RMS) respectives $\sigma_d$ et $\sigma_c$ définies sur la durée $T_s$ :

$$\frac{1}{T_s} \cdot \int_{(n-1) \cdot T_s}^{n \cdot T_s} \Sigma \cdot dt = 2 \cdot \sigma_d{}^2 + \sigma_c{}^2$$

$$\frac{1}{T_s} \cdot \int_{(n-1) \cdot T_s}^{n \cdot T_s} \Delta \cdot dt = bs \cdot \sigma_c{}^2$$

avec

$$\Sigma = V_h{}^2 + V_b{}^2 \quad \text{et} \quad \Delta = V_h{}^2 - V_b{}^2.$$

Les grandeurs $\Sigma$ et $\Delta$ sont représentatives respectivement de l'action des forces symétriques et l'action des forces dissymétriques agissant sur le pendule. Les grandeurs $\Sigma$ et $\Delta$ sont considérées indépendantes de la position z, ce qui suppose que les électrodes sont pilotées en tension et non en charge.

L'équation d'évolution moyennée sur la période d'échantillonnage devient alors (équation I) :

$$\underbrace{\ddot{z}_m - \ddot{z}_0}_{\approx 0} = \frac{k_e - k}{m} \cdot (z_m - z_0) + \frac{k}{m} \cdot z_c + \underbrace{\frac{C_1 \cdot \sigma_c{}^2}{2 \cdot m \cdot e} \cdot (\varepsilon_1 \cdot \lambda + bs)}_{\text{Accélération électrostatique}} - \gamma$$

Avec

$$\begin{cases} k_e = \frac{C_2 \cdot \sigma_c{}^2}{e^2} \cdot (\lambda + \varepsilon_2 \cdot bs) \\ \lambda = 2 \cdot \frac{\sigma_d{}^2}{\sigma_c{}^2} + 1 \end{cases}$$

$k_e$ étant la raideur électrostatique,
k étant la raideur mécanique,
$z_c$ étant l'offset mécanique,

$z_0$ étant l'offset mécanique.

L'expression de la force électrostatique est donc linéaire vis-à-vis de bs, de plus la raideur électrostatique est désormais constante si bien que l'accélération estimée est calculée comme une fonction affine de bs.

La formule ci-dessus suppose que la dérivée seconde de $z_m$ soit suffisamment proche de zéro pour être négligée, ce qui implique de respecter la condition ci-dessous :

$$\left| \ddot{z}_m \right| \ll \left| -\frac{k}{m} \cdot z_m \right|$$

En pratique cela revient à limiter le spectre de $z_m$ à une bande de fréquence située très en deçà de la première fréquence propre de l'élément sensible.

Pour évaluer les erreurs dues aux différents défauts et exposer les moyens d'y remédier, les notions d'accélération maximale et d'accélération de mise en butée sont introduites.

Si le capteur et sa mise en oeuvre sont dépourvus de défauts, l'accélération maximale $\gamma_{max}$ qu'il est possible de compenser est obtenue en remplaçant bs par 1 dans l'équation I, soit :

$$\gamma_{max} = \frac{C_1}{2 \cdot m \cdot e} \cdot \sigma_c^2 \rightarrow C_1 = \frac{2 \cdot m \cdot e}{\sigma_c^2} \cdot \gamma_{max}$$

La permittivité électrique de l'entrefer entre les électrodes, la masse volumique, la surface active et l'épaisseur de l'élément sensible sont notées respectivement $\varepsilon$, $\rho$, $S$ et $h$. Le matériau du pendule étant choisi, on observe que $\gamma_{max}$ dépend uniquement de l'épaisseur du pendule et de la moyenne quadratique du champ électrique $\sigma_c/e$:

$$\left. \begin{array}{l} C_1 \approx \varepsilon \cdot \dfrac{S}{e} \\ m \approx \rho \cdot S \cdot h \end{array} \right\} \rightarrow \gamma_{max} = \frac{\varepsilon}{2 \cdot \rho \cdot h} \cdot \left( \frac{\sigma_c}{e} \right)^2$$

Par ailleurs, l'accélération $\gamma_0$ qui mettrait un pendule idéal en butée en l'absence de force électrostatique vaut :

$$\gamma_0 = \frac{k}{m} \cdot e \rightarrow \frac{k}{m} = \frac{\gamma_0}{e}$$

Par substitution dans l'équation I, on met en évidence des erreurs $\gamma_1$, $\gamma_2$ et $\gamma_3$ :

$$\gamma_{max} \cdot bs = \gamma - \left\{ \underbrace{\underbrace{\left[ 2 \cdot \frac{C_2}{C_1} \cdot (\lambda + \varepsilon_2 \cdot bs) \cdot \gamma_{max} - \gamma_0 \right] \cdot \frac{z_m - z_0}{e}}_{\gamma_1} + \underbrace{\gamma_0 \cdot \frac{z_c}{e}}_{\gamma_2} + \underbrace{\lambda \cdot \gamma_{max} \cdot \varepsilon_1}_{\gamma_3}}_{\gamma_b} \right\} \rightarrow bs = \frac{\gamma - \gamma_b}{\gamma_{max}}$$

$$k_e = 2 \cdot \frac{C_2}{C_1} \cdot \frac{m}{e} \cdot (\lambda + \varepsilon_2 \cdot bs) \cdot \gamma_{max}$$

Les biais $\gamma_1$, $\gamma_2$ et $\gamma_3$ dépendent respectivement de l'offset électrique en détection, des contraintes exercées par la charnière et des dissymétries de force électrostatique. Concernant $\gamma_1$, la part proportionnelle à $bs \cdot \gamma_{max}$ constitue une erreur de facteur d'échelle de l'accéléromètre. Cependant, cette erreur est généralement négligeable car elle vaut typiquement :

$$2 \cdot \underbrace{\frac{C_2}{C_1}}_{\approx 1} \cdot \underbrace{\varepsilon_2}_{<10^{-3}} \cdot \underbrace{\frac{z_m - z_0}{e}}_{<10^{-3}} < 2\text{ppm}$$

Dans le cas où $z_m$ est nul, la composante du biais due à la détection est obtenue en remplaçant $z_0$ par sa valeur :

$$\gamma_1(z_m = 0) = -\left[ 2 \cdot \frac{C_2}{C_1} \cdot (\lambda + \varepsilon_2 \cdot \text{bs}) \cdot \gamma_{max} - \gamma_0 \right] \cdot \varepsilon_0 \cdot \frac{C_0}{C_1}$$

Généralement, le facteur d'échelle $\gamma_{max}$ et le biais $\gamma_b$ sont préalablement identifiés en usine dans une étape de calibration effectuée sur une plage de température cohérente de la plage d'utilisation de l'accéléromètre. Les paramètres de calibration qui diffèrent des paramètres réels du fait des erreurs de modélisation et du vieillissement étant notés avec un accent circonflexe, l'accélération estimée notée $\gamma_e$ est alors calculée selon la formule :

$$\gamma_e = \hat{\gamma}_b + \hat{\gamma}_{max} \cdot \text{bs}$$

Sachant l'expression de bs en fonction de $\gamma$, l'erreur relative de facteur d'échelle $\varepsilon_{max}$ est introduite:

$$\gamma_e = \hat{\gamma}_b + \underbrace{\frac{\hat{\gamma}_{max}}{\gamma_{max}}}_{1+\varepsilon_{max}} \cdot (\gamma - \gamma_b) = \hat{\gamma}_b + (1 + \varepsilon_{max}) \cdot (\gamma - \gamma_b)$$

Pour s'affranchir de l'erreur due à $\gamma_1$, on peut compenser la raideur électrique par la raideur mécanique de sorte que leur différence s'annule, ce qui annule la sensibilité du biais à $z_0$ :

$$\gamma_1 = \frac{\overbrace{k_e - k}^{0}}{m} \cdot (z_m - z_0) = \underbrace{\left[ 2 \cdot \frac{C_2}{C_1} \cdot (\lambda + \varepsilon_2 \cdot \text{bs}) \cdot \gamma_{max} - \gamma_0 \right]}_{0} \cdot \frac{z_m - z_0}{e}$$

Cependant du fait des dispersions de fabrication du capteur et de l'électronique, la différence des raideurs est imparfaitement annulée, ce qui réduit le bénéfice de l'opération. De plus même si la différence de raideur est parfaitement annulée pour une température de fonctionnement donnée, ce n'est pas le cas pour les autres températures de fonctionnement car les sensibilités thermiques du capteur et de son électronique sont différentes.

Le procédé de l'invention permet d'asservir la différence des raideurs mécanique et électrostatique à zéro ce qui annule l'effet du biais en détection.

Pour cela, $z_m$ est modulé par le circuit de commande selon un profil temporel prédéterminé mais pas nécessairement cyclique.

La réaction de $\gamma_e$ à cette perturbation notée $\Delta\gamma_e$ étant proportionnelle à la différence des raideurs, il suffit donc d'annuler cette réaction en ajustant $k_e$ c'est-à-dire $\lambda$. Selon que la perturbation est périodique ou pas, la réaction de $\gamma_e$ à $z_m$ peut être estimée par démodulation synchrone et filtrage, par moindres carrés ou par filtre de Kalman :

$$\Delta\gamma_e = \underbrace{\Delta\hat{\gamma}_b}_{0} + \underbrace{\Delta\varepsilon_{max}}_{0} \cdot (\gamma - \gamma_b) + (1 + \varepsilon_{max}) \cdot \left( \underbrace{\Delta\gamma}_{0} - \Delta\gamma_b \right) = 0 \rightarrow \Delta\gamma_b = 0$$

$$\rightarrow \left[ 2 \cdot \frac{C_2}{C_1} \cdot (\lambda + \varepsilon_2 \cdot \text{bs}) \cdot \gamma_{max} - \gamma_0 \right] \cdot \frac{z_m}{e} = 0$$

$$\rightarrow \gamma_b = \underbrace{\gamma_0 \cdot \frac{z_c}{e}}_{\gamma_2} + \underbrace{\lambda \cdot \gamma_{max} \cdot \varepsilon_1}_{\gamma_3}$$

L'ajustement de $\lambda$ (voir l'équation I) est obtenu en réglant $\sigma_d$ ce qui laisse $\varepsilon_{max}$ invariant. L'ajustement de $\sigma_d$ peut être obtenu en agissant sur la forme ou la durée de la tension v durant les phases de détection. La seconde solution sera préférée car elle laisse invariant le gain en détection.

La réaction de $\gamma_e$ à $z_m$ étant annulée par l'annulation de la différence des raideurs $k_e$ - k, la réaction de $\gamma_e$ à $z_0$ est également annulée et cette source de biais est éradiquée.

L'équilibrage des raideurs présente cependant une limitation de principe. En effet, le choix de l'accélération maximale étant généralement imposé, la condition d'équilibrage conduit à choisir dans ce cas :

$$\gamma_0 = 2 \cdot \frac{C_2}{C_1} \cdot \lambda \cdot \gamma_{max} \rightarrow \gamma_b = \lambda \cdot \gamma_{max} \cdot \left( 2 \cdot \frac{C_2}{C_1} \cdot \frac{z_c}{e} + \varepsilon_1 \right)$$

Ceci signifie que la raideur électrique qui est proportionnelle à $\gamma_{max}$, impose une raideur mécanique elle-même proportionnelle à l'accélération maximale à compenser. Cette solution est particulièrement bien adaptée pour les capteurs ayant des entrefers suffisamment grands pour réduire l'effet des déformations responsables de $z_c$. Cette solution est en outre avantageuse lorsqu'elle est appliquée à un capteur ayant des électrodes à surface variable dont la raideur électrostatique est naturellement voisine de zéro.

L'option d'utiliser une raideur mécanique faible pour réduire le biais dû à celle-ci impose généralement de renoncer à l'appariement des raideurs. Dans ce cas, la modulation initialement appliquée à $z_m$ n'est pas utilisée mais $z_m$ est ajusté pour compenser $z_0$ de sorte que :

$$\gamma_1 = \frac{k_e - k}{m} \cdot \underbrace{(z_m - z_0)}_{0}$$

Ceci est obtenu en modulant $k_e$ ou plus exactement $\lambda$ selon un profil temporel connu mais pas nécessairement reproductible.

La réaction de $\gamma_e$ à cette perturbation étant sensiblement proportionnelle à $z_m$ - $z_0$, il suffit en principe d'annuler cette réaction en ajustant $z_m$. Selon que la perturbation est périodique ou pas, la réaction de $\gamma_e$ à $k_e$ peut être estimée par démodulation synchrone et filtrage, par moindres carrés ou par filtrage de Kalman :

$$\Delta\gamma_b = \left( 2 \cdot \frac{C_2}{C_1} \cdot \frac{z_m - z_0}{e} + \varepsilon_1 \right) \cdot \Delta\lambda \cdot \gamma_{max} = 0 \rightarrow \frac{z_m - z_0}{e} = -\frac{C_1}{2 \cdot C_2} \cdot \varepsilon_1$$

$$\rightarrow \gamma_b = -\varepsilon_1 \cdot \varepsilon_2 \cdot bs \cdot \gamma_{max} + \left( \frac{C_1}{2 \cdot C_2} \cdot \varepsilon_1 + \frac{z_c}{e} \right) \cdot \gamma_0$$

Comme l'indique la relation ci-dessus, plutôt que de s'annuler, la quantité $z_m$ - $z_0$ s'ajuste en fonction de $\varepsilon_1$.

La modulation de $\lambda$ est obtenue en réglant $\sigma_d$ ce qui laisse $\varepsilon_{max}$ invariant. L'ajustement de $\sigma_d$ peut être obtenu en agissant sur la forme ou la durée de la tension v durant les phases de détection. La seconde solution sera préférée car elle laisse invariant le gain en détection.

Il est à noter que l'asservissement d'offset pénalise les capteurs ayant des électrodes à surfaces variables car le rapport $C_1/C_2$ naturellement grand dégrade le biais.

Dans le deuxième mode de réalisation des figures 2 et 3, le circuit d'excitation 6 est dépourvu de convertisseur numérique analogique 15 et comprend à la place un générateur de tension 30 relié via un interrupteur 31 à une entrée d'un étage amplificateur comportant une résistance d'entrée 32 reliée à un amplificateur 33 bouclé par un condensateur de filtrage 34 et d'une résistance 35.

Ceci permet de réduire le coût et la puissance dissipée du circuit d'excitation en supprimant le convertisseur numérique analogique.

La commande u valant 0 ou 1 pilote l'interrupteur 31. Ce dernier connecte la résistance 32 soit sur le générateur 30 de tension constante de référence **Ref** soit à la masse. La tension appliquée à la résistance 32 est amplifiée dans le rapport des valeurs des résistances 32, 35 (soit $-R_2/R_1$) et filtrée avec une constante de temps $R_2C$ (C étant la capacité du condensateur 34) qui prévient la saturation transitoire de l'amplificateur de charge 33 liée au dépassement de sa vitesse de balayage (dite slew-rate). Cette constante de temps doit cependant être choisie suffisamment petite devant $T_s$ pour que la tension de sortie de l'amplificateur de charge 33 soit revenue à une valeur proche de zéro lors des commutations de $I_1$ à $I_2$.

Pour réduire l'impact de la quantification du convertisseur analogique numérique sur le bruit d'estimation de l'accélération, le circuit de la figure 3 peut être utilisé.

L'étage amplificateur principal 16 du circuit de détection 7 est relié au convertisseur analogique numérique 19 par l'intermédiaire d'un étage compensateur, généralement désigné en 40, comportant une première résistance 41 et une deuxième résistance 42 reliées en série entre la sortie de l'étage amplificateur principal 16 et l'entrée du convertisseur analogique numérique 19. L'étage compensateur 40 comporte un amplificateur additionnel 43 et un interrupteur 44 montés respectivement en parallèle de la deuxième résistance 42, et un convertisseur numérique analogique 45 relié via une troisième résistance 46 à la deuxième résistance 42, à l'amplificateur additionnel 43 et à l'interrupteur 44. L'interrupteur 44 et le convertisseur numérique analogique 45 sont pilotés par le circuit de commande 8.

Ceci permet de réduire le bruit basse fréquence dû à la quantification du convertisseur analogique numérique 19.

Le gain $R_2/R_1$ qui tient lieu de zoom dans l'étage de compensation est fixé à une valeur très supérieure à l'unité. L'ouverture de l'interrupteur 44 a lieu pendant les phases $D_1$ et $D_2$ quand la sortie de l'amplificateur de charge 43 est stabilisée. Le convertisseur numérique analogique 45 est piloté par le circuit de commande 8 de sorte à maintenir la somme $y_1+y_2$ au voisinage de zéro, la dynamique du convertisseur numérique analogique peut être exploitée pour coder uniquement les variations de capacités amplifiées par le rapport $R_2/R_1$.

Le convertisseur numérique analogique 45 compense les effets de :

- La partie fixe des capacités.
- L'offset $v_{os}$.
- L'injection de charge $Q_{os}$.

Ces effets sont lentement variables, ce qui permet d'utiliser un convertisseur numérique analogique 45 lent et peu bruyant afin de réduire simultanément le coût et la puissance dissipée.

Au voisinage de la fréquence de coupure de la boucle sigma delta, la fonction de transfert en boucle ouverte doit tendre vers celle d'un intégrateur afin d'assurer un bon amortissement. Or, le comportement du pendule étant dominé en haute fréquence par les forces d'inerties, la fonction de transfert z/bs est assimilable à celle d'un double intégrateur. La fonction de transfert du correcteur doit donc tendre vers celle d'un dérivateur.

En cas d'utilisation d'un zoom, la saturation électrique de la détection précède la saturation mécanique liée à la mise butée du pendule. Lorsque la saturation électrique est atteinte, la fonction dérivateur normalement remplie par le correcteur ne peut plus être remplie et la boucle peut entrer dans un cycle limite dont l'issue ne peut généralement pas être garantie.

Pour contourner cette difficulté, il est souhaitable que le convertisseur analogique numérique 19 puisse au besoin mesurer non seulement la sortie du zoom mais également son entrée. Cela requiert simplement l'emploi d'un multiplexeur 2 vers 1 ainsi qu'une stratégie de contrôle adaptée.

Dans une configuration particulière du capteur selon le premier ou le deuxième mode de réalisation, le capteur comprend deux accéléromètres pendulaires électrostatiques qui sont pourvus chacun d'un circuit d'excitation et d'un circuit de détection et qui ont un axe sensible commun.

Les deux méthodes permettant d'annuler l'effet de l'offset en détection sont basées sur l'exploitation de la réaction de $\gamma_e$ à une perturbation connue. Si l'accélération appliquée au capteur présente des corrélations apparentes avec le signal de modulation, il en résultera une correction partiellement erronée de l'accélération estimée. L'emploi d'un filtre de Kalman peut réduire la sensibilité à ce type d'erreur mais pas l'annuler.

Si par exemple l'accéléromètre est soumis à un bruit blanc en accélération ayant une valeur efficace de $10g_{rms}$ sur une bande de fréquence allant de 0 à 10kHz et si la boucle d'asservissement de $\Delta\gamma$ est réglée avec une bande passante de 0,01Hz, il en résultera une erreur de compensation de 10 $mg_{rms}$ inacceptable pour certaines applications comme la navigation.

Cette difficulté peut être contournée grâce à l'emploi de 2 accéléromètres identiques à celui décrit ci-dessus dont les axes sensibles sont confondus. Il suffit alors d'appliquer la modulation de $z_m$ ou de $\lambda$ à l'un des deux accéléromètres seulement et à asservir à zéro la réaction de la différence des $\Delta\gamma$. Dans ce cas, l'effet de l'accélération appliquée est annulé aux dissymétries de gain et de calage d'axe près des deux accéléromètres.

Le gain des deux accéléromètres étant calibré, la différence des gains est inférieure à 100ppm, ce qui réduit l'erreur de $10mg_{rms}$ à $1\mu g_{rms}$. Cependant, l'accélération appliquée se manifeste encore à travers les différences de calage d'axe brutes qui sont inférieures à 10mrad. Cette limitation autorise néanmoins une réduction par 100 qui défaut initial qui passe de $10mg_{rms}$ à $100\mu g_{rms}$, valeur acceptable pour un système de navigation performant.

La modulation peut avantageusement être appliquée à l'un puis à l'autre des deux accéléromètres de sorte à obtenir une information redondante et précise à la fois. Plus généralement, il suffira d'utiliser pour les deux accéléromètres des signaux de modulation décorrélés entre eux. Un accéléromètre composite tel que celui-ci est dit accéléromètre double.

Si les limitations liées au calage d'axe sont jugées préjudiciables, il est possible de réduire encore leur influence en combinant les estimations et les modulations de 3 accéléromètres doubles dont les axes sensibles ont des directions indépendantes de préférence orthogonales entre elles.

Le défaut lié aux différences de calages d'axes brutes est alors réduit au résidu de modélisation et au vieillissement de ce dernier grâce à une calibration usine qui permet d'identifier la matrice de compensation ci-dessous :

$$\vec{\gamma}_{e,cor} = M \cdot \vec{\gamma}_e$$

Le vecteur $\vec{\gamma}_e$ est un vecteur 6x1 constitués des 6 informations issues des 6 accéléromètres, la matrice M est une matrice 6x6 qui corrige les erreurs de gain et de calage d'axe des 6 accéléromètres. Le vecteur $\vec{\gamma}_{e,cor}$ est un vecteur 6x1 constitué des 6 informations d'accélération corrigées redondantes deux à deux.

L'exploitation de $\vec{\gamma}_{e,cor}$ associée à l'emploi de 6 modulations décorrélées entre elles permet de réduire le poids des erreurs de gain et de calage d'axe à moins de 100ppm, ce qui porte le défaut résiduel à moins d'$1\mu g_{rms}$.

Bien entendu, l'invention n'est pas limitée aux modes de réalisation décrits mais englobe toute variante entrant dans le champ de l'invention telle que définie par les revendications.

En particulier, l'électronique du capteur peut avoir une structure différente de celles décrites. Par exemple, le circuit d'excitation du premier mode de réalisation peut être utilisé avec le circuit de détection du deuxième mode de réalisation et le circuit de détection du premier mode de réalisation peut être utilisé avec le circuit d'excitation du deuxième mode de réalisation.

En outre, l'invention est applicable à tout type d'accéléromètre pendulaire électrostatique. Ainsi, la mécanique du capteur peut avoir une structure différente de celle décrite. Par exemple, la masse sismique peut être reliée au boîtier par un nombre différent de charnières, disposées pour permettre un pivotement ou un coulissement de la masse sismique par rapport au boîtier.

Dans le cas ou le capteur comprend deux accéléromètres pendulaires électrostatiques, il est possible de ne prévoir qu'un seul circuit d'excitation pour les deux accéléromètres.

On notera qu'il peut être avantageux d'inverser l'ordre des phases de détection D1 et D2 à chaque période d'échantillonnage, afin de symétriser les mesures effectuées sur chaque couple d'électrodes.

## Revendications

1. Procédé de commande d'un capteur comprenant au moins un accéléromètre pendulaire électrostatique ayant une première électrode (5.1) et une deuxième électrode (5.2) fixes qui sont fixées à un boîtier (2) et qui sont reliées à un circuit d'excitation (6) et une troisième électrode (3) qui est portée par un pendule relié au boîtier pour être mobile et qui est reliée à un circuit de détection (7), comprenant les étapes de :

   - lors de deux phases successives de détection, exciter alternativement l'une et l'autre des électrodes fixes par des impulsions de détection pour détecter une première capacité et une deuxième capacité entre l'électrode mobile et les électrodes fixes,
   - estimer une position du pendule à partir des capacités détectées,
   - déterminer une erreur d'asservissement correspondant à une différence entre la position estimée et une position de consigne,
   - à partir de l'erreur d'asservissement, déterminer une commande déterminant si la prochaine impulsion de détection va pousser ou tirer le pendule,
   - calculer l'accélération à mesurer en fonction de la position de consigne et de la commande déterminée,
   - lors d'une phase de commande, exciter l'une ou l'autre des électrodes fixes par des impulsions de commande pour asservir à zéro l'erreur d'asservissement.

2. Procédé selon la revendication 1, dans lequel la position de consigne est modulée selon un profil temporel déterminé de telle manière qu'une réaction à la commande déterminée soit proportionnelle à une différence entre une raideur électrostatique et une raideur mécanique entre le pendule et le boîtier.

3. Procédé selon la revendication 2, dans lequel la réaction à la commande à ladite modulation est annulée en ajustant la forme ou la durée des impulsions de détection pour que la raideur électrostatique compense la raideur mécanique.

4. Procédé selon la revendication 1, dans lequel la position de consigne est ajustée pour compenser un biais d'estimation de position.

**5.** Procédé selon la revendication 1, dans lequel les étapes sont répétées selon des périodes, les phases de détection des première et deuxième capacités étant inversées d'une période à l'autre.

**6.** Procédé selon la revendication 1, dans lequel les étapes sont séparées par des phases de relaxation durant lesquelles le commutateur est positionné lorsque la tension du circuit d'excitation est nulle.

**7.** Capteur accélérométrique pour la mise en oeuvre du procédé selon la revendication 1, comprenant au moins un accéléromètre pendulaire électrostatique (1) ayant une première électrode (5.1) et une deuxième électrode (5.2) fixes qui sont fixées à un boîtier (2) et qui sont reliées à un circuit d'excitation (6) et une troisième électrode(3) qui est portée par un pendule relié au boîtier pour être mobile et qui est reliée à un circuit de détection (7), **caractérisé en ce que** le circuit d'excitation a une sortie raccordée à un commutateur (9) relié aux première et deuxième électrodes, le commutateur ayant une première position de connexion et une deuxième position de connexion pour raccorder sélectivement au circuit d'excitation la première électrode et la deuxième électrode, et **en ce que** le circuit d'excitation, le commutateur et le circuit de détection sont reliés à un circuit de commande (8) agencé pour que les première et deuxième électrodes soient excitées par des train d'impulsions de manière à maintenir le pendule dans une position de consigne et à déterminer une accélération subie par le pendule.

**8.** Capteur selon la revendication 7, dans lequel le circuit d'excitation comprend un convertisseur numérique analogique (15) raccordé au commutateur et piloté par le circuit de commande.

**9.** Capteur selon la revendication 7, dans lequel le circuit d'excitation comprend un générateur de tension constante (30) relié via un interrupteur (31) à une entrée d'un étage amplificateur/filtre (33-35) ayant une sortie formant la sortie du circuit d'excitation.

**10.** Capteur selon la revendication 7, dans lequel le circuit de détection comprend un étage amplificateur principal (17) ayant une entrée reliée à la troisième électrode et une sortie reliée à une entrée d'un unique convertisseur analogique numérique (19) ayant une sortie reliée à l'unité de commande.

**11.** Capteur selon la revendication 10, dans lequel l'étage amplificateur principal est relié au convertisseur analogique numérique par l'intermédiaire d'un étage compensateur (40) comportant une première résistance (41) et une deuxième résistance (42) reliées en série entre la sortie de l'étage amplificateur principal et l'entrée du convertisseur analogique numérique, l'étage compensateur comportant un amplificateur additionnel (43) et un interrupteur (44) montés respectivement en parallèle de la deuxième résistance, et un convertisseur numérique analogique (19) relié à la deuxième résistance, à l'amplificateur additionnel et à l'interrupteur, l'interrupteur et l'amplificateur additionnel étant reliés au circuit de commande.

**12.** Capteur selon la revendication 7, dans lequel le circuit de commande est agencé pour changer la position du commutateur lorsque la tension en sortie du circuit d'excitation est nulle.

**13.** Capteur selon la revendication 7, dans lequel le circuit de commande comporte un premier estimateur (10) de position du pendule ayant une entrée reliée au circuit de détection (7) et une sortie reliée à une entrée négative d'un sommateur (11) ayant une sortie reliée à une entrée d'un correcteur (12) ayant une sortie reliée à un séquenceur (13) et à un deuxième estimateur (14) ayant une sortie reliée à l'entrée additive du sommateur (11) et une première sortie fournissant une estimée de l'accélération et une deuxième sortie reliée à l'entrée positive du sommateur pour fournir à celui-ci une position modulée, le correcteur étant agencé pour déterminer une impulsion et le séquenceur étant agencé pour commander le circuit d'excitation, le commutateur et le circuit de détection.

**14.** Capteur selon la revendication 7, comprenant au moins deux accéléromètres pendulaires électrostatiques qui sont pourvus chacun d'un circuit d'excitation et d'un circuit de détection et qui ont un axe sensible commun.

**Patentansprüche**

**1.** Verfahren zum Steuern eines Sensors, der mindestens einen elektrostatischen pendelartigen Beschleunigungsmesser mit einer ortsfesten ersten Elektrode (5.1) und einer ortsfesten zweiten Elektrode (5.2) umfasst, die an einem Gehäuse (2) befestigt und mit einer Erregerschaltung (6) verbunden sind, sowie mit einer dritten Elektrode (3), die von einem mit dem Gehäuse verbundenen Pendel getragen wird, um beweglich zu sein, und die mit einer Detektionsschaltung (7) verbunden ist, umfassend die Schritte:

- während zweier aufeinander folgender Detektionsphasen abwechselndes Erregen der einen und der anderen der ortsfesten Elektroden durch Detektionsimpulse, um eine erste Kapazität und eine zweite Kapazität zwischen der beweglichen Elektrode und den ortsfesten Elektroden zu erfassen,

- Schätzen einer Position des Pendels anhand der erfassten Kapazitäten,

- Bestimmen eines Regelungsfehlers, der einer Differenz zwischen der geschätzten Position und einer Sollposition entspricht,

- anhand des Regelungsfehlers Festlegen einer Steuerung, die bestimmt, ob der nächste Detektionsimpuls das Pendel anschieben oder ziehen wird,

- Berechnen der zu messenden Beschleunigung in Abhängigkeit der Sollposition und der festgelegten Steuerung,

- während einer Steuerphase Erregen der einen oder der anderen der ortsfesten Elektroden durch Steuerimpulse, um den Regelungsfehler auf Null zu regeln.

2. Verfahren nach Anspruch 1, wobei die Sollposition gemäß einem Zeitprofil moduliert wird, das derart festgelegt wird, dass eine Reaktion auf die festgelegte Steuerung proportional zu einer Differenz zwischen einer elektrostatischen Steifigkeit und einer mechanischen Steifigkeit zwischen dem Pendel und dem Gehäuse ist.

3. Verfahren nach Anspruch 2, wobei die Reaktion auf die Steuerung auf die genannte Modulation aufgehoben wird, indem die Form oder die Dauer der Detektionsimpulse so eingestellt wird, dass die elektrostatische Steifigkeit die mechanische Steifigkeit kompensiert.

4. Verfahren nach Anspruch 1, wobei die Sollposition eingestellt wird, um eine Positionsschätzverzerrung zu kompensieren.

5. Verfahren nach Anspruch 1, bei dem die Schritte in Perioden wiederholt werden, wobei die Detektionsphasen zur Detektion der ersten Kapazität und der zweiten Kapazität von einer Periode zur anderen umgekehrt werden.

6. Verfahren nach Anspruch 1, wobei die Schritte durch Relaxationsphasen getrennt sind, während derer der Umschalter positioniert ist, wenn die Spannung der Erregerschaltung Null ist.

7. Beschleunigungsmesssensor zum Durchführen des Verfahrens nach Anspruch 1, umfassend mindestens einen elektrostatischen pendelartigen Beschleunigungsmesser (1) mit einer ortsfesten ersten Elektrode (5.1) und einer ortsfesten zweiten Elektrode (5.2), die an einem Gehäuse (2) befestigt und mit einer Erregerschaltung (6) verbunden sind, sowie mit einer dritten Elektrode (3), die von einem mit dem Gehäuse verbundenen Pendel getragen wird, um beweglich zu sein, und die mit einer Detektionsschaltung (7) verbunden ist, **dadurch gekennzeichnet, dass** die Erregerschaltung einen Ausgang hat, der mit einem Umschalter (9) verbunden ist, der mit der ersten und der zweiten Elektrode verbunden ist, wobei der Umschalter eine erste Verbindungsposition und eine zweite Verbindungsposition hat, um die erste Elektrode und die zweite Elektrode selektiv mit der Erregerschaltung zu verbinden, und dass die Erregerschaltung, der Umschalter und die Detektionsschaltung mit einer Steuerschaltung (8) verbunden sind, die so ausgebildet ist, dass die erste und die zweite Elektrode durch Impulsfolgen derart erregt werden, dass das Pendel in einer Sollposition gehalten und eine von dem Pendel erfahrene Beschleunigung bestimmt wird.

8. Sensor nach Anspruch 7, bei dem die Erregerschaltung einen Digital-Analog-Wandler (15) umfasst, der mit dem Umschalter verbunden ist und von der Steuerschaltung gesteuert wird.

9. Sensor nach Anspruch 7, bei dem die Erregerschaltung einen Generator (30) für konstante Spannung umfasst, der über einen Unterbrecher (31) mit einem Eingang einer Verstärker-/Filterstufe (33-35) verbunden ist, die einen Ausgang hat, der den Ausgang der Erregerschaltung bildet.

10. Sensor nach Anspruch 7, bei dem die Detektionsschaltung eine Hauptverstärkerstufe (17) umfasst, die einen Eingang hat, der mit der dritten Elektrode verbunden ist, sowie einen Ausgang, der mit einem Eingang eines einzigen Analog-Digital-Wandlers (19) verbunden ist, der einen Ausgang hat, der mit der Steuereinheit verbunden ist.

11. Sensor nach Anspruch 10, bei dem die Hauptverstärkerstufe mit einem Analog-Digital-Wandler über eine Kompensationsstufe (40) verbunden ist, die einen ersten Widerstand (41) und einen zweiten Widerstand (42) umfasst, die zwischen dem Ausgang der Hauptverstärkerstufe und dem Eingang des Analog-Digital-Wandlers in Reihe geschaltet sind, wobei die Kompensationsstufe einen zusätzlichen Verstärker (43) und einen Unterbrecher (44) umfasst, die jeweils parallel zum zweiten Widerstand geschaltet sind, und einen Digital-Analog-Wandler (19), der mit dem zweiten Widerstand, dem zusätzlichen Verstärker und dem Unterbrecher verbunden ist, wobei der Unterbrecher und der zusätzliche Verstärker mit der Steuerschaltung verbunden sind.

12. Sensor nach Anspruch 7, bei dem die Steuerschaltung so ausgebildet ist, dass sie die Position des Umschalters wechselt, wenn die Ausgangsspannung der Erregerschaltung Null ist.

13. Sensor nach Anspruch 7, bei dem die Steuerschaltung einen ersten Positionsschätzer (10) des Pendels umfasst, der einen Eingang hat, der mit der Detektionsschaltung (7) verbunden ist, sowie einen Ausgang, der mit einem negativen Eingang eines Addierers (11) verbunden ist, der einen Ausgang hat, der mit einem Eingang eines Korrektors (12) verbunden ist, der einen Ausgang hat, der mit einem Sequenzierer (13) und mit einem zweiten Schätzer (14) verbunden ist, der einen Ausgang hat, der mit dem additiven Eingang des Addierers (11) verbunden ist, und einen ersten Ausgang, der eine Schätzung der Beschleunigung liefert, sowie einen zweiten Ausgang, der mit dem positiven Eingang des Addierers verbunden ist, um diesem eine modulierte Position zu liefern, wobei der Korrektor so ausgebildet ist, dass er einen Impuls bestimmt, und der Sequenzierer so ausgebildet ist, dass sie die Erregerschaltung, den Umschalter und die Detektionsschaltung steuert.

14. Sensor nach Anspruch 7, umfassend mindestens zwei elektrostatische pendelartige Beschleunigungsmesser, die jeweils mit einer Erregerschaltung und einer Detektionsschaltung versehen sind und eine gemeinsame empfindliche Achse haben.

**Claims**

1. A method of controlling a sensor comprising at least one electrostatic pendular accelerometer having stationary first (5.1) and second electrodes (5.2) that are secured to a housing (2) and that are connected to an exciter circuit (6), and a third electrode (3) that is carried by a pendulum connected to the housing so as to be movable and that is connected to a detector circuit (7), the method comprising the steps of:

   • during two successive detection stages, exciting in alternation first one and then the other of the stationary electrodes by detection pulses in order to detect a first capacitance and a second capacitance between the movable electrode and the respective stationary electrodes;
   • estimating a position of the pendulum from the detected capacitances;
   • determining a servo-control error corresponding to a difference between the estimated position and a setpoint position;
   • on the basis of the servo-control error, determining a command specifying whether the next detection pulse is to push or to pull the pendulum;
   • calculating the acceleration that is to be measured as a function of the setpoint position and of the determined command; and
   • during a control stage, exciting one or the other of the stationary electrodes by control pulses for servocontrolling the servo-controlled error to zero.

2. A method according to claim 1, wherein the setpoint position is modulated with a time profile that is determined in such a manner that a reaction to a determined command is proportional to a difference between an electrostatic stiffness and a mechanical stiffness between the pendulum and the housing.

3. A method according to claim 2, wherein the reaction to the command to said modulation is canceled by adjusting the form or the duration of the detection pulses so that the electrostatic stiffness compensates the mechanical stiffness.

4. A method according to claim 1, wherein the setpoint position is adjusted to compensate a position estimation bias.

5. A method according to claim 1, wherein the steps are repeated in periods, the stages of detecting the first and second capacitances being interchanged from one period to another.

6. A method according to claim 1, wherein the steps are separated by relaxation stages during which the switch is positioned so that the voltage of the excitation circuit is zero.

7. An accelerometer sensor for performing the method according to claim 1, the sensor comprising at least one electrostatic pendular accelerometer (1) having stationary first (5.1) and second electrodes (5.2) that are fastened to a housing (2) and that are connected to an exciter circuit (6), and a third electrode (3) that is carried by a pendulum connected to the housing so as to be movable and that is connected to a detector circuit (7), the sensor being **characterized in that** the exciter circuit has an output connected to a switch (9)connected to the first and second electrodes, the switch having a first connection position and a second connection position for selectively connecting the first electrode or the second electrode to the exciter circuit, and **in that** the exciter circuit, the switch, and the detector circuit are connected to a control circuit (8) arranged so that the first and second electrodes are excited by pulse trains in such a manner as to keep the pendulum in a setpoint position and in such a manner as to determine an acceleration to which the pendulum is subjected.

8. A sensor according to claim 7, wherein the exciter circuit includes a digital-to-analog converter (15) connected to the switch and controlled by the control circuit.

9. A sensor according to claim 7, wherein the exciter circuit includes a constant voltage generator (30) connected via a selector (31) to an input of an amplifier/filter stage (33-35) having an output forming the output of the exciter circuit.

10. A sensor according to claim 7, wherein the detector circuit has a main amplifier stage (17) with an input connected to the third electrode and an output connected to an input of a single analog-to-digital converter (19) having an output connected to the control unit.

11. A sensor according to claim 10, wherein the main amplifier stage is connected to the analog-to-digital converter via a compensator stage (40) having a first resistor (41) and a second resistor (42) connected in series between the output of the main amplifier stage and the input of the analog-to-digital converter, the compensator stage having an additional amplifier (43) and a selector (44) both connected in parallel with the second resistor, and a digital-to-analog converter (19) connected to the second resistor, to the additional amplifier, and to the selector, the selector and the additional amplifier being connected to the control circuit.

12. A sensor according to claim 7, wherein the control circuit is arranged to change the position of the switch when the output voltage from the exciter circuit is zero.

13. A sensor according to claim 7, wherein the control circuit has a first estimator (10) for estimating the position of the pendulum, the first estimator having an input connected to the detector circuit (7) and an output connected to a negative input of a summing circuit (11) having an output connected to an input of a corrector (12) having an output connected to a sequencer (13) and to a second estimator (14) having an output connected to the additive input of the summing circuit (11), and a first output supplying an estimate of the acceleration and a second output connected to the positive input of the summing circuit to supply it with a modulated position, the corrector being arranged to determine a pulse and the sequencer being arranged to control the exciter circuit, the switch, and the detector circuit.

14. A sensor according to claim 7, having at least two electrostatic pendular accelerometers each provided with a respective exciter circuit and detector circuit, and that share a substantially common axis.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5812427 A
- US 6301965 B